# EUROPEAN PATENT APPLICATION

(11) **EP 4 410 867 A1**
(43) Date of publication of application: **07.08.2024**
(21) Application number: 23154722.5
(22) Date of filing: 02.02.2023
(51) Int. Cl.: C08G 73/02, A61K 47/00, C08J 3/075, C08G 65/22, C08G 65/333, C08G 65/48, C08G 83/00

(54) **POLYOL-B-POLYOXAZOLINE COPOLYMERS**

(71) Applicant: Freie Universität Berlin, 14195 Berlin (DE)
(72) Inventor: HAAG, Rainer, 12209 Berlin (DE); ADELI, Mohsen, 12209 Berlin (DE); ZABIHI, Fatemeh, 12209 Berlin (DE); BEIRANVAND, Siamak, Lorestan (IR)
(74) Representative: Maikowski & Ninnemann Patentanwälte Partnerschaft mbB

(57) **Abstract**

The invention relates to a copolymer comprising i) a first block chosen from a polyglycerol having a molecular weight lying in a range of from 250 Da to 20 kDa and a poly(vinyl alcohol) having a molecular weight lying in a range of from 1 kDa to 100 kDa; ii) a second block covalently bound to the first block, wherein the second block is an optionally substituted polyoxazoline; and iii) a third block covalently bound to the second block, wherein the third block is a hydrocarbon chain comprising 1 to 20 carbon atoms that are substituted with or interrupted by at least one amino group and that are optionally substituted with or interrupted by at least one entity chosen from the group consisting of oxygen atoms, hydroxyl groups, carboxyl groups, sulfur atoms, sulfhydryl groups, sulfate groups, and sulfonate groups. The invention further relates to a hydrolysis product of this copolymer in which i) -CO-R³ groups of the optionally substituted polyoxazoline of the second block that are bound to a nitrogen atom of the optionally substituted polyoxazoline are replaced by -H, wherein R³ denotes -H or a substituent of the optionally substituted polyoxazoline, and/or ii) the third block is fully or partially replaced by a proton or a hydroxyl group.

## Description

The invention relates to a copolymer according to the preamble of claim 1, to uses of such copolymer according to the preambles of claims 11 to 13, and to a method for manufacturing such copolymer according to the preamble of claim 14.

Non-healing diabetic wounds can result in amputation of limbs and finally in death [1]. These wounds are non-healing due to impaired natural repairing processes because of infections in the wound area, an increased amount of inflammatory factors, an impaired extracellular matrix, and inefficient angiogenesis. Healthcare cost of diabetic wound healing increases the clinical burden, given that the overall costs for treating and healing a single ulcer are around $8000, the costs for treating and healing an ulcer with infection are around $17,000, and the costs of an amputation amount to around $45,000 [2]. Therefore, new therapeutic agents for the early and efficient treatment of non-healing diabetic wounds are highly important [3] and can decrease the burden, caused by consequences of this health issue, on public health [4].

Polymers are a class of materials that have been used as scaffolds for the wound dressing and regeneration abundantly [5]. It is widely accepted that wound healing in the presence of moist scaffolds is more effective than in the presence of dry analogs, due to the faster epithelialization [6]. In addition, antimicrobial activity of wound dressings is an important factor that affects the wound healing process dramatically [7]. *Staphylococcus* is one of the most common bacteria causing serious infection in burns and wounds, thus making the wound healing process very challenging.

Hydrocolloids are a class of polymers with a large number of hydroxyl functional groups and hydrophilic properties. Dressing of diabetic foot ulcers by hydrocolloids results in a hypoxic environment that elaborates the liquefaction of necrotic tissue and finally leads to autolytic debridement [8]. It was previously shown that hydrocolloids are able to decrease the risk of infection by increasing the leukocyte penetration and preventing the spread of bacteria [9]. Moreover, hydrocolloids improve the formation of blood vessels on the surfaces of a wound during the healing process, thus accelerating the wound healing process [10].

It is an object of the present invention to provide novel compounds that are suited for treating wounds, such as non-healing diabetic wounds. A further object of the present invention is the provision of an appropriate manufacturing method of such compounds.

This object is achieved with a copolymer having the claim elements of claim 1.

Such a copolymer comprises i) a first block chosen from a polyglycerol having a molecular weight lying in a range of from 250 Da to 20 kDa and a poly(vinyl alcohol) having a molecular weight lying in a range of from 1 kDa to 100 kDa; ii) a second block covalently bound to the first block, wherein the second block is an optionally substituted polyoxazoline; and iii) a third block covalently bound to the second block, wherein the third block is a hydrocarbon chain comprising 1 to 20 carbon atoms that are substituted with or interrupted by at least one amino group and that are optionally substituted with or interrupted by at least one entity chosen from the group consisting of oxygen atoms, hydroxyl groups, carboxyl groups, sulfur atoms, sulfhydryl groups, sulfate groups, and sulfonate groups.

The object is likewise achieved with a hydrolysis product of such a copolymer (obtainable by a hydrolysis reaction of the copolymer) in which -CO-R³ groups of the optionally substituted polyoxazoline of the second block that are bound to a nitrogen atom of the optionally substituted polyoxazoline are replaced by -H, wherein R³ denotes -H (in case of non-substituted polyoxazoline) or a substituent (in case of a substituted polyoxazoline). Additionally or alternatively, the third block of the copolymer is, in the hydrolysis product, fully or partially replaced by a proton or a hydroxyl group.

The molecular weight of the polyglycerol and of the poly(vinyl alcohol) is to be understood as number average molecular weight. It can be determined by size exclusion chromatography (SEC).

In an embodiment, the molecular weight of the polyglycerol lies in a range of from 500 Da to 15 kDa, in particular from 1 kDa to 10 kDa, in particular from 2 kDa to 9 kDa, in particular from 3 kDa to 8 kDa, in particular from 4 kDa to 7 kDa, in particular from 5 kDa to 6 kDa.

In an embodiment, the molecular weight of the poly(vinyl alcohol) lies in a range of from 2 kDa to 95 kDa, in particular from 3 kDa to 90 kDa, in particular from 4 kDa to 85 kDa, in particular from 5 kDa to 80 kDa, in particular from 6 kDa to 75 kDa, in particular from 7 kDa to 70 kDa, in particular from 8 kDa to 60 kDa, in particular from 9 kDa to 50 kDa, in particular from 10 kDa to 40 kDa, in particular from 15 kDa to 35 kDa, in particular from 20 kDa to 30 kDa.

In an embodiment, the first block is the polyglycerol.

In an embodiment, the first block is the poly(vinyl alcohol).

In an embodiment, the polyglycerol is a linear or a hyperbranched polyglycerol. Linear polyglycerols are particularly appropriate for forming linear block-copolymers, wherein hyperbranched polyglycerols are particularly appropriate for forming star-shaped copolymers.

In an embodiment, the copolymer is a linear copolymer, in which the first block and the second block are linearly bound to each other.

In an embodiment, the copolymer is a branched copolymer, in which the first block forms a core or a backbone and the second block forms a sidechain of the first block. A star-shaped copolymer is an example of a branched copolymer. A graft copolymer is a further example of a branched copolymer. In a graft copolymer, a main polymer chain (first block; also referred to as backbone) carries a plurality of side chains (i.e., second and third blocks) that are covalently bound to the backbone.

In an embodiment, the polyoxazoline is a methyl substituted or an ethyl substituted polyoxazoline. In this embodiment, R³ is a methyl residue (-CH₃) or an ethyl residue (-CH₂-CH₃). Poly-(2-methyl-2-oxazolin) and poly-(2-ethyl-2-oxazolin) are particularly appropriate polyoxazolines.

In an embodiment, the third block is an amino acid residue. Generally, any amino acid is appropriate as third block. Amino acids carrying an additional amino group are particularly appropriate as third block. In an embodiment, the third block is an arginine residue.

In an embodiment, the third block is a saccharide residue carrying at least one amino group.

In an embodiment, the copolymer corresponds to the following general formula (I):

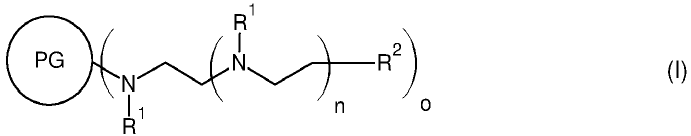

In this context,
- PG: denotes a linear or hyperbranched polyglycerol;
- R¹: is -H, -CO-CH₃ or -CO-CH₂-CH₃;
- R²: is -H, -OH, or a hydrocarbon chain comprising 1 to 20 carbon atoms that are substituted with or interrupted by at least one amino group and that are optionally substituted with or interrupted by at least one entity chosen from the group consisting of oxygen atoms, hydroxyl groups, carboxyl groups, sulfur atoms, sulfhydryl groups, sulfate groups, and sulfonate groups;
- n: is ≥ 1; and
- o: is ≥ 1.

If R¹ is -H and/or if R² is -H or -OH, the formula (I) represents a hydrolysis product of the copolymer according to the general definition.

The number of substituents of the polyglycerol (i.e., the value of o) is determined by the degree of substitution of the polyglycerol, i.e., of the amount of terminal hydroxyl groups that are replaced by the substituent. In an embodiment, the degree of substitution lies in a range of from 5 % to 95 %, in particular from 10 % to 90 %, in particular from 20 % to 80 %, in particular from 30 % to 70 %, in particular from 40 % to 60 %, in particular from 45 % to 50 %.

In an embodiment, the hydrocarbon chain comprises 2 to 19 carbon atoms, in particular 3 to 18, in particular 4 to 17, in particular 5 to 16, in particular 6 to 15, in particular 7 to 14, in particular 8 to 13, in particular 9 to 12, in particular 10 to 11 carbon atoms.

In an embodiment, n is 1 to 50000, in particular 5 to 45000, in particular 10 to 40000, in particular 15 to 35000, in particular 25 to 30000, in particular 50 to 25000, in particular 75 to 20000, in particular 100 to 15000, in particular 200 to 10000, in particular 300 to 7500, in particular 400 to 5000, in particular 500 to 2500, in particular 600 to 2000, in particular 700 to 1500, in particular 800 to 1000.

In an embodiment, o is 1 to 10000, in particular 5 to 9000, in particular 10 to 8000, in particular 15 to 7500, in particular 25 to 7000, in particular 50 to 6000, in particular 75 to 5000, in particular 100 to 4000, in particular 200 to 3000, in particular 300 to 2000, in particular 400 to 1000, in particular 500 to 900, in particular 600 to 800.

In an embodiment, the copolymer corresponds to the following general formula (II):

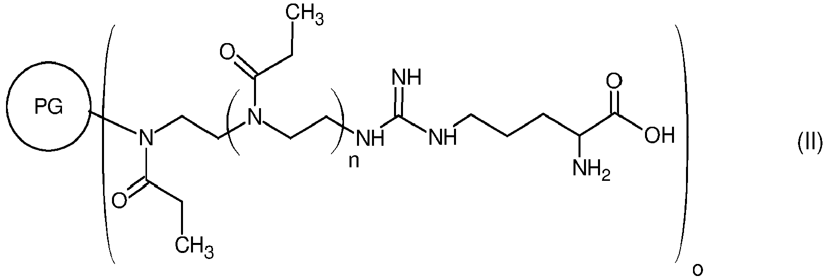

In this context,
- n: is ≥ 1; and
- o: is ≥ 1.

In an embodiment, n and/or o have the more limited meanings as indicated above.

In an embodiment, the copolymer corresponds to the following general formula (III):

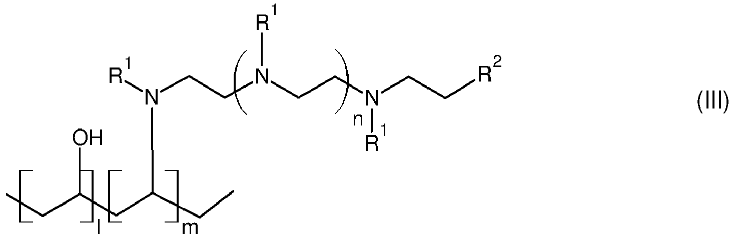

In this context,
- R¹: is -H, -CO-CH₃, or -CO-CH₂-CH₃;
- R²: is -H, -OH, or a hydrocarbon chain comprising 1 to 20 carbon atoms that are substituted with or interrupted by at least one amino group and that are optionally substituted with or interrupted by at least one entity chosen from the group consisting of oxygen atoms, hydroxyl groups, carboxyl groups, sulfur atoms, sulfhydryl groups, sulfate groups, and sulfonate groups;
- I: is ≥ 1;
- m: is 1; and
- n: is 1.

In an embodiment, the number of carbon atoms of the hydrocarbon chain is smaller than 20 according to the above explained embodiment.

In an embodiment, n has a more limited meaning according to the above-explained embodiment.

In an embodiment, I is 1 to 50000, in particular 5 to 45000, in particular 10 to 40000, in particular 15 to 35000, in particular 25 to 30000, in particular 50 to 25000, in particular 75 to 20000, in particular 100 to 15000, in particular 200 to 10000, in particular 300 to 7500, in particular 400 to 5000, in particular 500 to 2500, in particular 600 to 2000, in particular 700 to 1500, in particular 800 to 1000.

In an embodiment, m is 1 to 50000, in particular 5 to 45000, in particular 10 to 40000, in particular 15 to 35000, in particular 25 to 30000, in particular 50 to 25000, in particular 75 to 20000, in particular 100 to 15000, in particular 200 to 10000, in particular 300 to 7500, in particular 400 to 5000, in particular 500 to 2500, in particular 600 to 2000, in particular 700 to 1500, in particular 800 to 1000.

The units of the poly(vinyl alcohol) chain within the brackets bearing the indices m and I are randomly distributed within the poly(vinyl alcohol) chain. Thus, it is not necessary that a substituted residue is followed by a non-substituted residue. Rather, a plurality of substituted residues can be arranged adjacent to each other. Likewise, a plurality of non-substituted residues can be adjacent to each other. Typically, the amount of non-substituted residues is higher than the amount of substituted residues of the poly(vinyl alcohol) chain.

In an embodiment, the copolymer corresponds to the following general formula (IV):

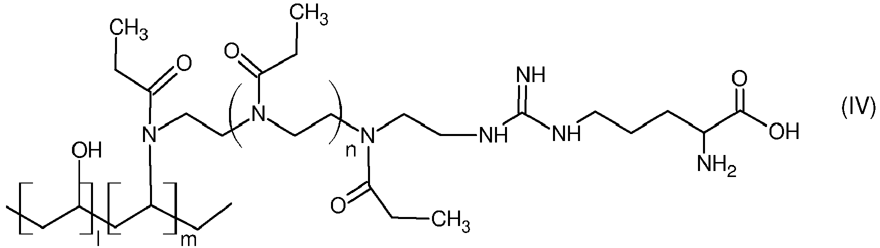

In this context,
- I: is ≥ 1;
- m: is ≥ 1; and
- n: is ≥ 1.

In an embodiment, the parameters l, m, and/or n have the more limited meanings as indicated above.

In an embodiment, m has a value that is 1 to 50 %, in particular 2 to 45 %, in particular 3 to 40 %, in particular 5 to 35 %, in particular 6 to 30 %, in particular 7 to 25 %, in particular 8 to 20 %, in particular 9 to 15 %, in particular 10 to 12 % of a value of l. To give an example, if l is 4000, then m has a range of from 40 to 2000.

The explanations given above with respect to the substituted and non-substituted units of the poly(vinyl alcohol) chain (i.e., the units within the brackets bearing the indices m and l) are also valid for this embodiment.

In an aspect, the present invention relates to a nanoparticle comprising a plurality of copolymer molecules, wherein the nanoparticle has a mean diameter (determined by dynamic light scattering at a copolymer concentration of 1 mg/mL in water or an aqueous buffer) lying in a range of from 10 nm to 1000 nm, in particular from 20 nm to 900 nm, in particular from 30 nm to 800 nm, in particular from 40 nm to 700 nm, in particular from 50 nm to 600 nm, in particular from 60 mm to 500 nm, in particular from 70 nm to 400 mm, in particular from 80 nm to 300 nm, in particular from 90 nm to 200 mm, in particular from 100 nm to 150 nm.

In an aspect, the present invention relates to the medical use of a copolymer (or a hydrolysis product of this copolymer) according to the preceding explanations. This medical use is in particular the use in therapy. A particular appropriate therapeutic application of the copolymer is the treating of wounds such as diabetic wounds. Diabetic wounds are wounds of a patient who suffers from diabetes.

In an embodiment, the copolymer (or the hydrolysis product of this copolymer) is used in form of a nanoparticle comprising or essentially consisting of the copolymer for the medical use.

In an aspect, the present invention relates to the use of a copolymer according to the preceding explanations or of a hydrolysis product of this copolymer as carrier for delivering a nucleic acid (such as DNA or RNA) in vitro.

In an aspect, the present invention relates to the use of a copolymer according to the preceding explanations or of a hydrolysis product of this copolymer as carrier for delivering a nucleic acid (such as DNA or RNA) in vivo, in particular as a therapeutic agent for delivering a nucleic acid to its intended site of action within a human or animal body.

In an aspect, the present invention relates to a medical method of treating a wound, in particular a diabetic wound, of a patient in need thereof with a copolymer or a nanoparticle according to the preceding explanations.

In an embodiment, the concentration of the copolymer lies in a range of from 1 to 10 mg/mL, in particular 2 to 9 mg/mL, in particular 3 to 8 mg/mL, in particular 4 to 7 mg/mL, in particular 5 to 6 mg/mL.

In an aspect, the present invention relates to a method for manufacturing a copolymer according to the preceding explanations. This method comprises the steps explained in the following.

In one method step, an at least partially mesylated polyglycerol having a polyglycerol backbone with a molecular weight lying in a range of from 250 Da to 20 kDa, or an at least partially mesylated poly(vinyl alcohol) having a poly(vinyl alcohol) backbone with a molecular weight lying in a range of from 1 kDa to 100 kDa is reacted with 2-methyl-2-oxazoline or 2-ethyl-2-oxazoline. This reaction takes place in the reaction mixture and is carried out for a first time period at a first temperature. The result of this reaction is a first intermediate product.

Afterwards, a hydrocarbon compound is added to the reaction mixture. The hydrocarbon compound has a hydrocarbon chain comprising 1 to 20 carbon atoms that are substituted with or interrupted by at least one amino group and that are optionally substituted with or interrupted by at least one entity chosen from the group consisting of oxygen atoms, hydroxyl groups, carboxyl groups, sulfur atoms, sulfhydryl groups, sulfate groups, and sulfonate groups. The hydrocarbon compound is allowed to react with the first intermediate product for a second period of time at a second temperature.

Afterwards, a copolymer according to the above explanations can be obtained from the reaction mixture.

In an embodiment, the degree of mesylation of the polyglycerol and/or of the poly(vinyl alcohol) lies in a range of from 1 % to 100 %, in particular from 2 % to 95 %, in particular from 3 % to 90 %, in particular from 4 % to 85 %, in particular from 5 % to 80 %, in particular from 6 % to 75 %, in particular from 7 % to 70 %, in particular from 8 % to 65 %, in particular from 9 % to 60 %, in particular from 10 % to 55 %, in particular from 15 % to 50 %, in particular from 20 % to 40 %, in particular from 25 % to 30 %.

In an embodiment, the first temperature and the second temperature are the same temperature.

In an embodiment, the first temperature and/or the second temperature lies in a range of from 20 °C to 100 °C, in particular from 30 °C to 95 °C, in particular from 40 °C to 90 °C, in particular from 50 °C to 85 °C, in particular from 60 °C to 80 °C, in particular from 70 °C to 75 °C. A particularly appropriate temperature range is from 75 °C to 85 °C.

In an embodiment, the first time period is 12 hours to 72 hours, in particular 24 hours to 60 hours, in particular 36 hours to 48 hours.

In an embodiment, the second time period is 12 hours to 72 hours, in particular 24 hours to 60 hours, in particular 36 hours to 48 hours.

In an embodiment, the second time period is shorter than the first time period.

In an embodiment, the reaction of the at least partially mesylated polyglycerol or the at least partially mesylated poly(vinyl alcohol) with the oxazoline is carried out in an organic solvent, e.g. in acetonitrile or in an acetonitrile/water mixture.

In an embodiment, the hydrocarbon compound is an amino acid, in particular arginine, or a saccharide carrying at least one amino group.

All embodiments of the copolymer can be combined in any desired way and can be transferred either individually or in any arbitrary manner to the medical use and to the methods. Likewise, all embodiments of the medical use can be combined in any desired way and can be transferred either individually or in any arbitrary manner to the copolymer and to the methods. Finally, all embodiments of the methods can be combined in any desired way and can be transferred either individually or in any arbitrary combination to the respective other method, to the copolymer and to its medical use.

Further details of aspects of the present invention will be explained in the following making reference to exemplary embodiments and accompanying Figures. In the Figures:
- Figures 1A to 1C: show a scheme of the synthesis of hPG-b-PEtO;
- Figure 2: shows a scheme of the synthesis of PVA-graft-PEtO;
- Figure 3A: shows a ¹H NMR spectrum of hPG-b-PEtO;
- Figure 3B: shows a ¹³C NMR spectrum of hPG-b-PEtO;
- Figure 4A: shows a ¹H NMR spectrum of PVA-graft-PEtO;
- Figure 4B: shows a ¹³C NMR spectrum of PVA-graft-PEtO;
- Figure 5A: shows an HMQC NMR spectrum of hPG-b-PEtO;
- Figure 5B: shows a COSY NMR spectrum of hPG-b-PEtO;
- Figure 5C: shows an HMBC NMR spectrum of hPG-b-PEtO;
- Figure 5D: shows a DEPT135 NMR spectrum of hPG-b-PEtO;
- Figure 6A: shows a GPC chromatogram of hPG-b-PEtO;
- Figure 6B: shows a DLS diagram of hPG-b-PEtO at a concentration of 1 mg/mL;
- Figure 7A: shows a GPC chromatogram of PVA-graft-PEtO;
- Figure 7B: shows a DLS diagram of PVA-graft-PEtO at a concentration of 1 mg/mL;
- Figure 8A: shows a scheme of the hydrolysis of hPG-b-PEtO to obtain a poly(glycerol-b-ethyleneimine) derivative;
- Figure 8B: shows ¹H NMR spectra of the hydrolysis product of the hydrolysis reaction of hPG-b-PEtO at different time points;
- Figure 9A: shows the cytotoxicity of hPG-b-PEtO against HaCat cells in a CCK8 assay;
- Figure 9B: shows the cytotoxicity of hPG-b-PEtO against HeLa cells in a CCK8 assay;
- Figure 10A: shows the cytotoxicity of various concentrations of hPG-b-PEtO against human dermal fibroblast cells in a MTT assay after 24 and 48 h incubation time;
- Figure 10B: shows the proliferation of human fibroblast cells treated with different concentrations of hPG-*b*-PEtO analyzed by BrdU cell proliferation assay;
- Figure 11A: shows the cytotoxicity of various concentrations of hPG-*b*-PEtO against human dermal keratinocyte cells in a MTT assay after 24 and 48 h incubation time;
- Figure 11B: shows the proliferation of human keratinocyte cells treated with different concentrations of hPG-*b*-PEtO analyzed by BrdU cell proliferation assay;
- Figure 12A: shows the results of an animal study of wound healing by hPG-*b*-PEtO over different incubation times for infected wounds of non-diabetic animals; and
- Figure 12B: shows the results of an animal study of wound healing by hPG-*b*-PEtO over different incubation times for infected wounds of diabetic animals.

In the following, exemplary embodiments will be explained in which partially mesylated hyperbranched polyglycerol (hPG) and partially mesylated poly(vinyl alcohol) (PVA) have been used as initiators for a ring-opening polymerization of 2-ethyl-2-oxazoline. A branched copolymer of hPG and poly(2-ethyl-2-oxazoline) (PEtO) (i.e., hPG-*b*-PEtO) and a grafted copolymer of PVA and PEtO (i.e., PVA-*graft*-PEtO) were obtained on a few hundreds of grams scale. In aqueous solutions, these copolymers created nanoparticles with 70 to 200 nm average size.

hPG-b-PEtO nanoparticles showed a high biocompatibility both *in vitro* and *in vivo.* They did not show a significant harmful effect on human skin. Due to their biocompatibility, hydration, suitable size, and deep penetration into damaged skin, hPG-b-PEtO nanoparticles were further investigated for diabetic wound healing. According to animal studies, hPG-b-PEtO nanoparticles were able to accelerate healing of diabetic wounds and regeneration of injured tissues in the wound region. Due to its straightforward synthesis on big scale, high biocompatibility, and high ability for the diabetic wound healing, hPG-*b*-PEtO and *PVA-graft-*PEtO are promising compounds for treating diabetic wounds such as foot ulcers.

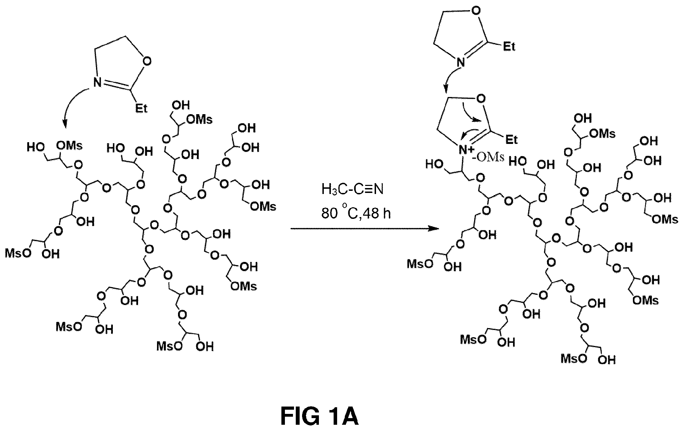

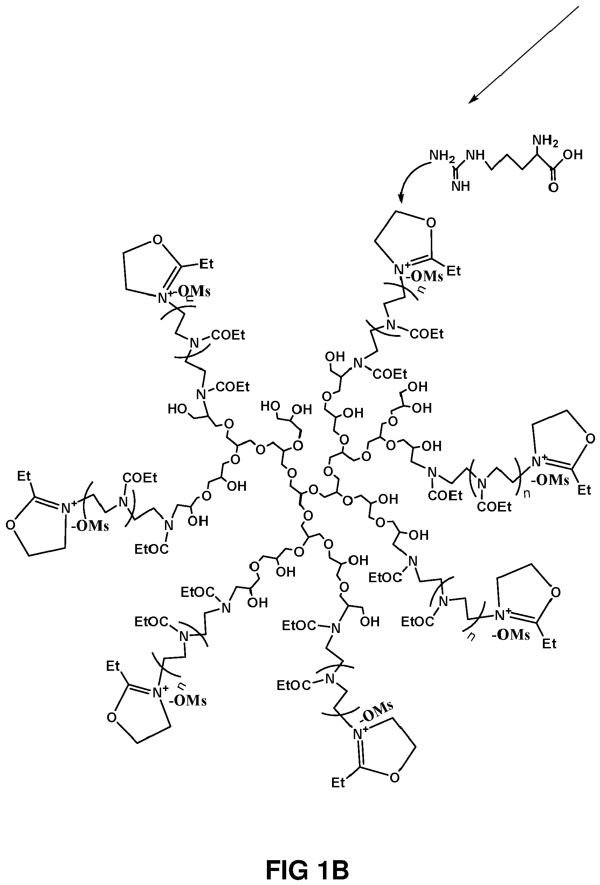

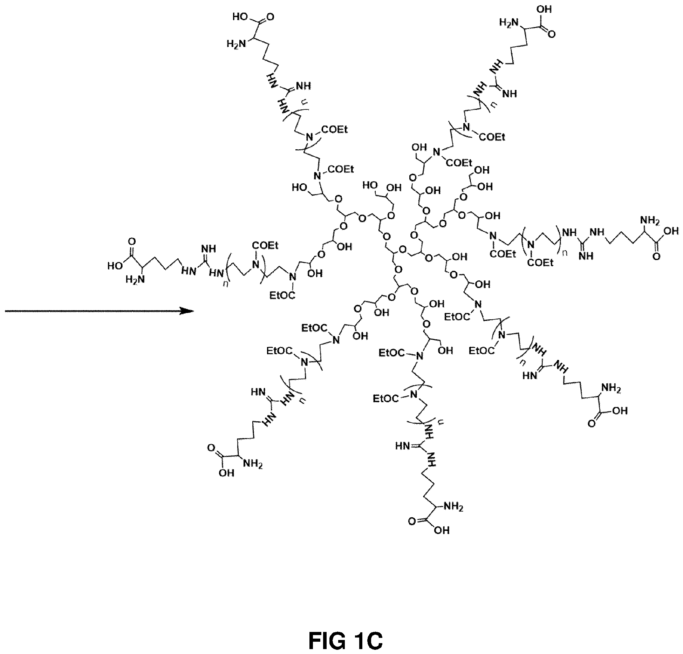

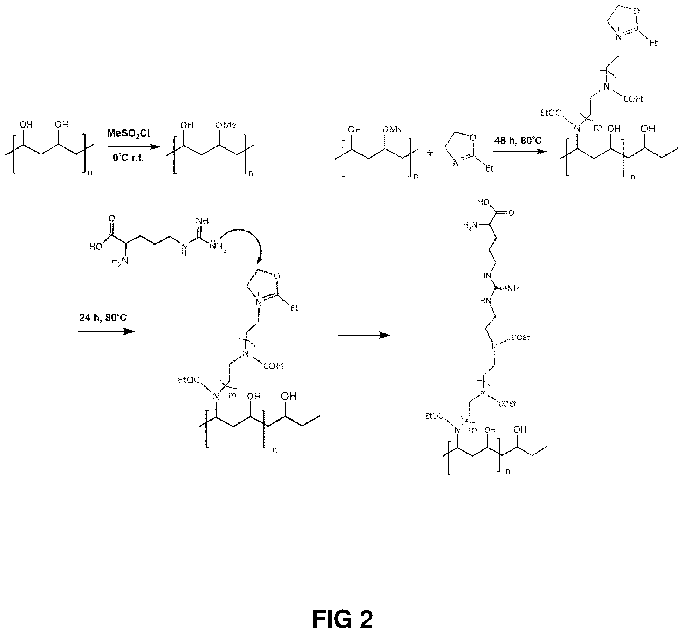

hPG (Mn = 5 KDa, with 50 % mesyl groups) and PVA (Mn = 35 KDa, 5 % mesyl groups) were used for a ring-opening polymerization of 2-ethyl-2-oxazoline and production of PG-b-PEtO and PVA-*graft*-PEtO copolymers according to the reaction schemes illustrated in Figures 1A, 1B, and 1C the one hand and Figure 2 and the other hand. In this context, the reaction product illustrated in Figure 1A led to the reaction product illustrated in Figure 1B, which, in turn, led to the reaction product illustrated in Figure 1C.

For the synthesis of hPG-b-PEtO and PVA-*graft*-PEtO, mesylated polyglycerol (500 mg, 5 kDa) or mesylated poly(vinyl alcohol) (500 mg, 35 kDa) was dissolved in dry acetonitrile with a final volume of 200 ml in a three-neck reaction flask under argon atmosphere. The reaction was done at 80 °C (heating by oil bath) under reflux condition. 2-ethyl-2-oxazoline (5 ml, 50 mmol) was added to the flask and the mixture was stirred (500 rpm) for 48 hours. The reaction was quenched by adding arginine (acting as carbohydrate chain carrying a plurality of amino groups, i.e., a carbohydrate chain being substituted with or interrupted by at least one amino group) to the mixture to construct the star-shaped hPG-b-PEtO and the PVA-graft-PEtO copolymers. For this step, arginine (500 mg, 0.35 mmol) was dissolved in a mixture of distilled water and acetonitrile (1/10 v/v). Water was evaporated under reduced pressure at high temperature and the mixture was added to the reaction flask. The mixture was stirred for at least 24 hours.

Then, the reaction mixture was cooled down and filtered by paper filter and dialyzed using a regenerated cellulose (RC) membrane with a molecular weight cut-off (MWCO) of 1 kDa. The final product was again filtered with a paper filter, then dried and fully characterized by different spectroscopic, chromatographic and microscopic methods (e.g., ¹H NMR, ¹³C NMR and GPC).

The mesyl group (which is denoted as OMs in the Figures) can also referred to as methanesulfonyl group and corresponds to the formula CH₃SO₂-R.

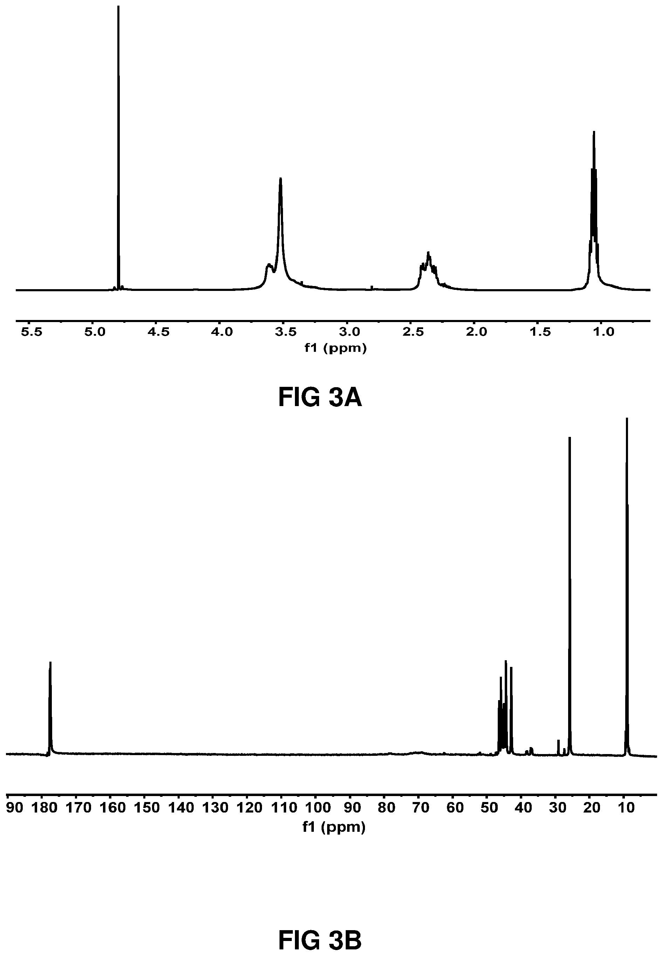

In ¹H NMR spectra, signals at 1 ppm and 2.4 ppm were assigned to hanging methyl and methylene groups, and a signal at 3.5 ppm was assigned to the backbone methylene groups of poly(2-ethyl-2-oxazoline) blocks. Signals of methylene protons of the hPG core appeared at 3.3 ppm and 3.6 ppm. Protons of arginine appeared as weak signals in an area ranging from 1.63 ppm to 3.27 ppm (Figure 3A). In ¹³C NMR spectra, signals at 8 ppm and at 25 ppm were assigned to hanging methyl and methylene groups of polyoxazoline blocks, and signals at 45 ppm and at 180 ppm were assigned to the methylene of backbone and carbonyl groups of these blocks. A weak signal for carbon atoms of hPG appeared at 65 to 73 ppm (Figure 3B).

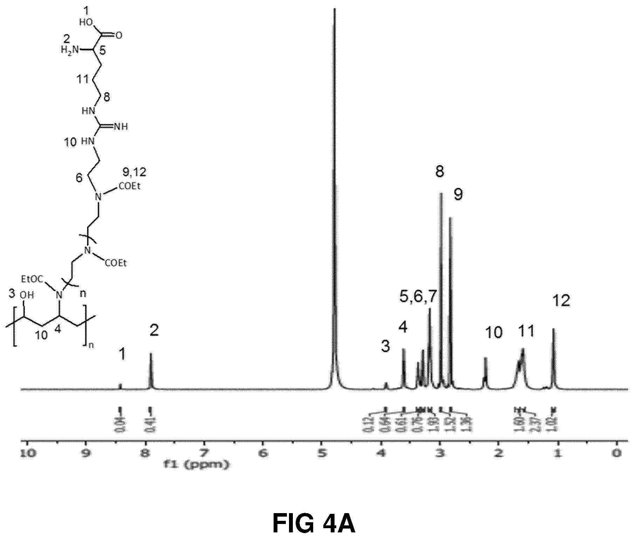

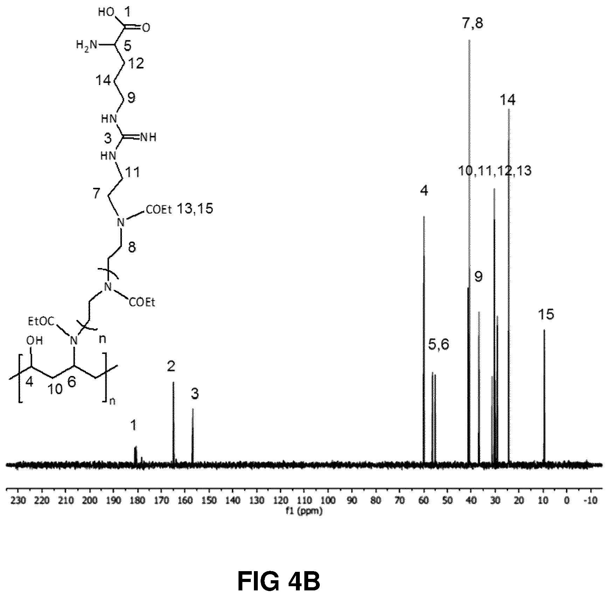

In the ¹H NMR spectrum of PVA-*graft*-PEtO, signals of poly(vinyl alcohol) and polyoxazoline blocks are labelled with numbers; the same numbers are indicated in the formula of PVA-graft-PEtO depicted adjacent to the NMR spectrum to visualize the chemical group being causative for the respective signal in the NMR spectrum (Figure 4A). These signals and signals of arginine segments, which are also labeled in the spectrum, indicate the successful synthesis of this copolymer. Appearing signals of different blocks of PVA-*graft*-PEtO in the ¹³C NMR spectrum were counted as a further prove for the successful production of this compound under the above-mentioned conditions (Figure 4B).

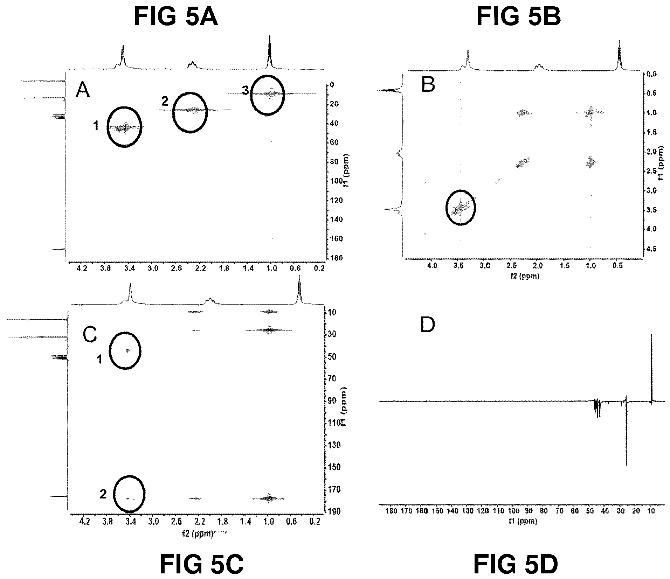

In heteronuclear multiple quantum coherence NMR (HMQC NMR; Figure 5A), a correlation between carbon atoms and protons of ethyl groups as well as coupling of protons and carbon atoms of backbone methylene groups confirmed the results of ¹H and ¹³C NMR.

Furthermore, coupling of proton signals at 3.3 ppm and 3.5 ppm, assigned to the hPG core, with carbon signals at 50 ppm, assigned to the backbone and methylene groups of polyoxazoline, indicated a conjugation of polyoxazoline arms to the hPG core (Figure 5A). In correlation spectroscopy NMR (COSY NMR) spectra, a correlation between protons of methylene groups of the polyoxazoline backbone at 3.5 ppm and protons of the hPG core at 3.3 ppm and 3.6 ppm confirmed the conjugation of polyoxazoline arms to the hPG core (Figure 5B).

Two-dimensional heteronuclear multiple-bond connectivity (HMBC) NMR showed a correlation between the protons of hPG at 3.3 ppm and 3.5 ppm and the carbon atom of methylene groups of the backbone of polyoxazoline at 45 ppm as well as the carbonyl group at 180 ppm. The signals were weak because they are evoked only by atoms at the hPG-polyoxazoline junction (Figure 5C). In distortionless enhancement by polarization transfer NMR (DEPT NMR) spectra, a signal at 8 ppm, which appeared in positive phase, was assigned to the methyl carbons of polyoxazoline blocks. Based on these experimental results, it could be concluded that hPG and polyoxazoline blocks are covalently connected to each other.

The accuracy of gel permeation chromatography (GPC) to determine the molecular weight of hyperbranched and star polymers is not particularly high due to a lack of appropriate standards. However, it is a useful measurement to investigate the homogeneity of the product of polymerization.

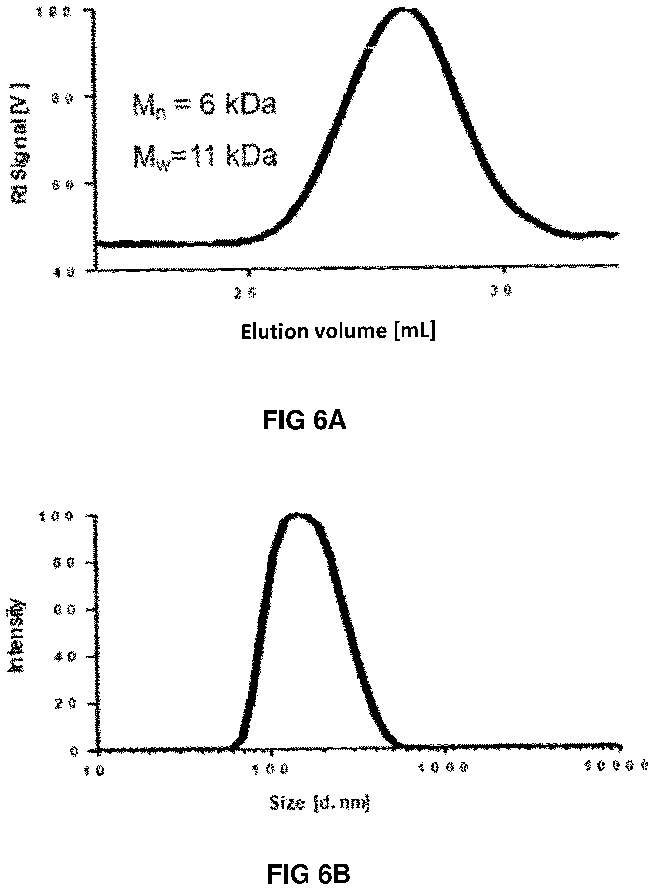

GPC measurements showed a monomodal diagram for hPG-b-PEtO, indicating the purity of this copolymer and an absence of homopolymers in the synthesized product (Figure 6A). Dynamic light scattering (DLS) showed an average size of 70 nm for this copolymer at a concentration of 1 mg/mL and of 200 nm at a concentration of 5 mg/mL in an aqueous solution or distilled water, conforming the ability of hPG-b-PEtO for self-assembly and formation of nanoparticles in such media (Figure 4b).

Size and morphology of nanoparticles was also evaluated by scanning electron microscopy (SEM). According to SEM images, nanoparticles were spherical and their size depended on their concentrations. At 1 mg/mL and 5 mg/mL concentrations they showed 80 nm and 200 nm average size, respectively (data not shown).

The SEM examinations also confirmed that the nanoparticles had a core-shell structure (data not shown). Owing to the high water solubility of hPG, the outer layer of the nanoparticles is made-up by polyglycerol segments, wherein the inner layer or core of the nanoparticles is composed of assembled polyoxazoline chains. This was confirmed by the higher contrast of the core of the nanoparticles that is considered to be evoked by the nitrogen atoms in the polyoxazoline chains [20].

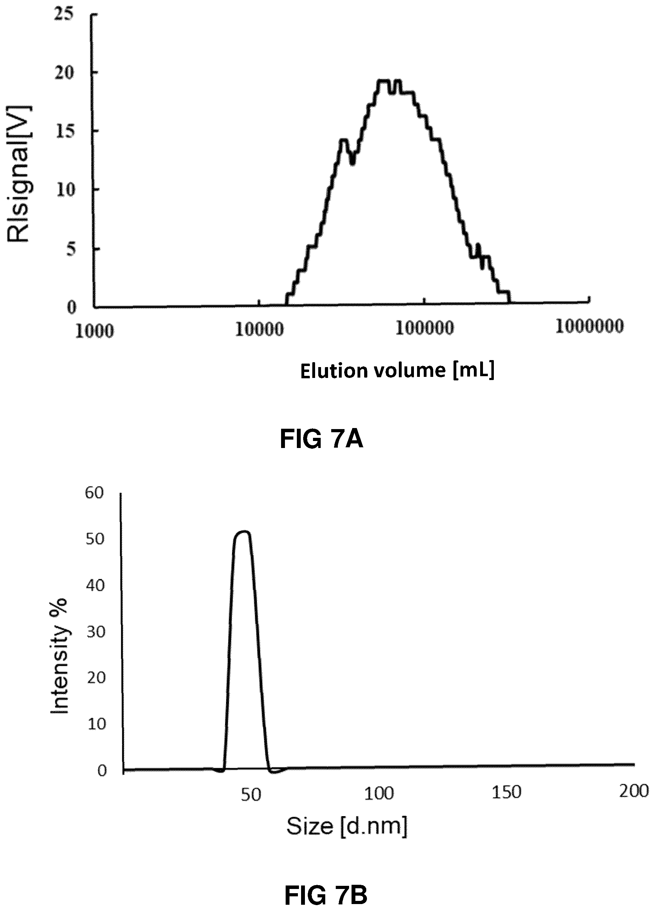

A GPC analysis showed a monomodal diagram for PVA-*graft*-PEtO confirming its homogeneity and the absence of homopolymers within the synthesized product. The number average molecular weight (Mn) of the copolymer was around 78 KDa and thus almost double the number average molecular weight of PVA, indicating the efficiency of mesyl groups for the initiation of polymerization of 2-ethyl-2-oxazoline and the production of PVA-*graft*-PEtO (Figure 7A).

DLS showed an average size of PVA-graft-PEtO in aqueous solutions of 250 nm (Figure 7B).

SEM images displayed cubic particles with average sizes in the range of micrometers for this copolymer, indicating the ability of this compound for self-assembly in a special pattern and for forming particles with a defined shape (data not shown). Hydrogen bonding by arginine segments is considered the driving force of assembly. Upon evaporation of solvent, hydrogen bonding was increased.

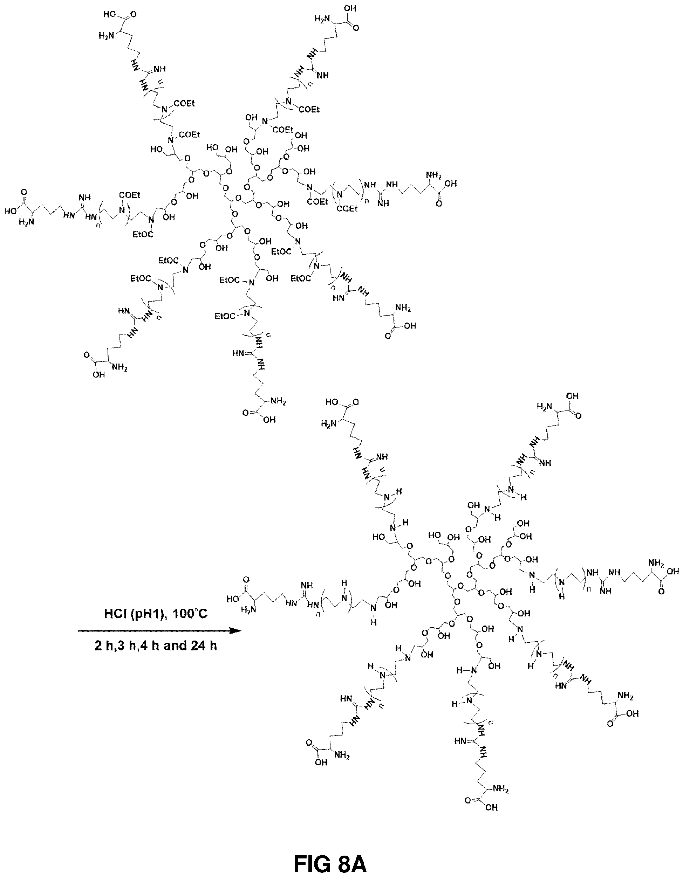

Polyoxazoline chains were also partially hydrolyzed to produce poly(glycerol-*b*-ethyleneimine) with various degrees of hydrophobicity and functionality (see reaction scheme of Figure 8A). Poly(glycerol-*b*-ethyleneimine) is a hydrolysis product of hPG-*b*-PEtO, in which the residue R³ is -H. Hydrolysis is an efficient and straightforward way to produce a variety of poly(glycerol-b-ethyleneimine) derivatives with different physicochemical properties.

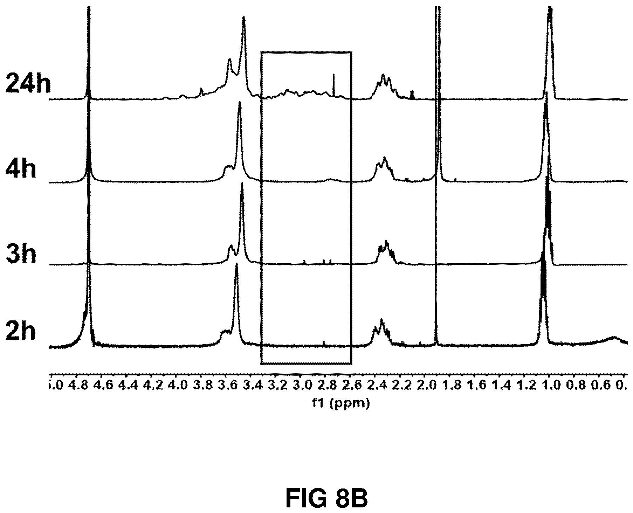

Figure 8B shows ¹H-NMR spectra of hPG-*b*-PEtO after incubation in hydrochloric acid for different incubation times. The signal of methylene protons of polyethylenediamine at 2.8 ppm to 3 ppm appeared after 3 hours and the peak area of this segment raised with increasing hydrolyzing time. SEM images of hPG-*b*-PEtO after 2 and 24 hours hydrolyzing time were recorded. While the average size of particles was not significantly changed, their morphology was converted to seemingly more crystalline structures (data not shown).

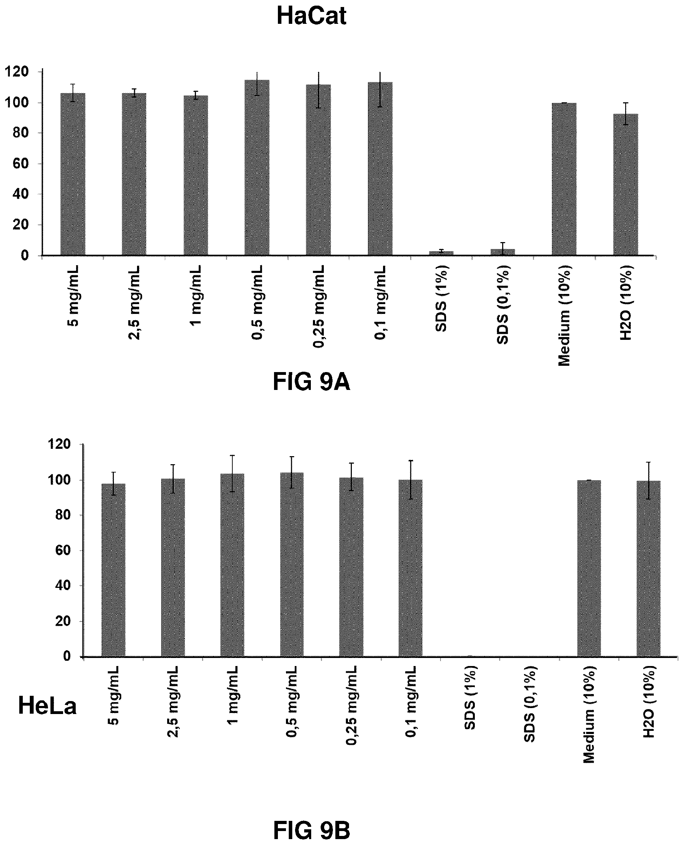

After characterization of hPG-*b*-PEtO, the toxicity of this copolymer and its cellular uptake were investigated. Incubation of hPG-*b*-PEtO with cultured immortalized human keratinocyte cells (HaCat) and cultured immortalized human cervical-cancer derived cells (HeLa) did not show any significant toxicity up to 5 mg/mL according to cell counting kit 8 (CCK8) assay (Figures 9A and 9B).

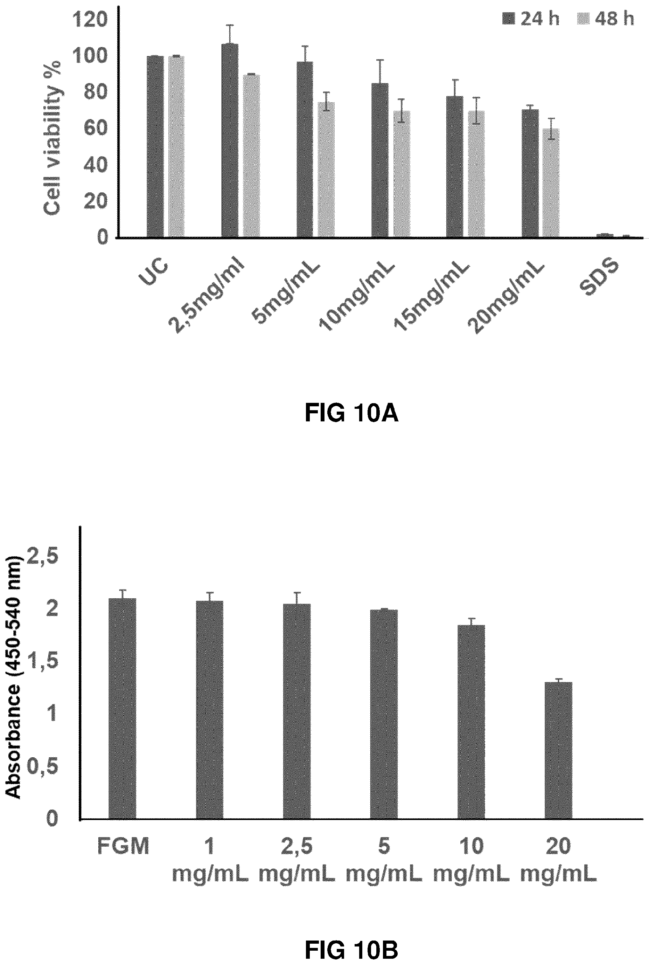

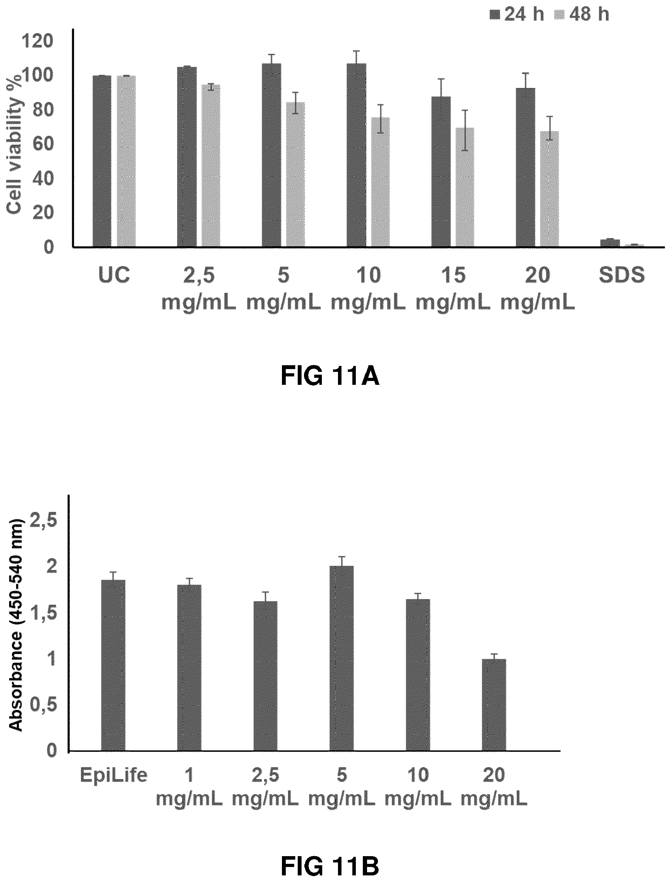

In addition to CCK8 assay on HeLa and HaCat cell lines, an MTT (3-(4,5-dimethylthiazol-2-yl)-2,5-diphenyltetrazolium bromide) test was performed on human dermal fibroblasts and keratinocytes to evaluate the cell toxicity of different concentrations of hPG-b-PEtO. Fibroblast and keratinocyte cells (10⁴ cells/well) were seeded in a 96-well plate. Next day, the medium was replaced with freshly prepared hPG-b-PEtO in the culture medium at different concentrations (2.5, 5, 10, 15, 20 mg/mL). Cells were further incubated for 24 h and 48 h with the test materials. Then, the medium was replaced by 100 µL MTT solution (0.5 mg/mL) and the cells were incubated for 4 h at 37 °C. The purple formazan crystals were dissolved in 50 µL dimethyl sulfoxide (DMSO), and the optical densities of the wells on the plate were determined at 540 nm using a plate reader. The MTT assay (Figures 10A and 11A) indicated more than 70% viability upon exposure of fibroblasts with up to 10 mg/mL hPG-b-PEtO and keratinocytes with up to 15 mg/mL with hPG-b-PEtO over 24 h and 48 h incubation times, respectively. A significant toxicity for hPG-b-PEtO was observed only for a concentration of 20 mg/mL.

Moreover, a BrdU (5-bromo-2'-deoxyuridine) cell proliferation assay was performed to evaluate cell proliferation effect of hPG-b-PEtO in a dose-dependent manner. Human dermal fibroblast and keratinocyte cells were seeded on a 96-well plate (10⁴ cells/well) and cultured in growth medium overnight. The next day, the medium was replaced with freshly prepared hPG-b-PEtO in culture medium at different concentrations (1, 2.5, 5, 10, 20 mg/mL).

After 24 h incubation time, 20 µL of BrdU labeling solution was added and incubated at 37 °C for further 24 h. Cell medium was removed and the cells were fixed with fixative buffer for 30 minutes at room temperature (rt). Then, the cells were analyzed by a multi-step BrdU ELISA (enzyme-linked immunosorbent assay) procedure. As shown in Figure 10B (fibroblasts) and 11B (keratinocytes), 1 to 10 mg/mL concentrations of hPG-b-PEtO did not significantly influence the proliferation of the respective cells. Rather, proliferation was almost identical to that in respective growth medium (FGM for fibroblasts or EpiLife for keratinocytes) without hPG-*b*-PEtO. However, a clear cytotoxic effect was observed for hPG-b-PEtO at a concentration of 20 mg/mL.

A live/dead assay was performed to assess the biocompatibility of hPG-b-PEtO on human dermal fibroblast and keratinocyte cells. In this study, fibroblasts (10⁵ cells/well) were treated for 24 hours with hPG-*b*-PEtO having a concentration of 5 mg/mL. Untreated cells with the same density were used as control. Cells were incubated with live/dead staining dye for further 3 hours. While viable cells emitted green fluorescence after interaction with dye, dead cells appeared red. At a concentration of hPG-*b*-PEtO of 5 mg/mL no significant toxicity was observed. Rather, the cells proliferated similar to untreated cells (data not shown).

In a further assay, hPG-*b*-PEtO was labeled with fluorescein isothiocyanate (FITC) (hPG-b-PEtO_{FITC}). Subsequently, the uptake of hPG-*b*-PEtO_{FITC} by human dermal fibroblast and keratinocyte cells after different incubation times was evaluated. After 24 hours of incubation, the specific signal of hPG-*b*-PEtO_{FITC} was already clearly observed in the cytoplasm of the cells. The uptake was time-dependent; after 24 hours of incubation, an intense signal of the labeled copolymer indicated a high uptake of this compound by the cells (data not shown). The efficient uptake of hPG-*b*-PEtO could be mediated by the arginine segments of nanoparticles. The morphology and appearance of cells did not significantly change upon uptake of copolymer. This is a further indicator of the biocompatibility of this compound.

To elaborate whether hPG-b-PEtO is appropriate for diabetic wound healing, the penetration of this compound through human skin and its effect on human skin was investigated. Fluorescence microscopy images showed that hPG-b-PEtO_{FITC} is able to interact with healthy human skin and to stay in the stratum corneum (data not shown). However, it penetrated deep into the dermis layer of an *ex vivo* wound model of human skin (data not shown).

For this *ex vivo* wound model, human skin was obtained form 3 healthy donors undergoing cosmetic surgeries with informed consent and ethical approval of the Charité - Universitätsmedizin Berlin (approval EA1/135/06). Few hours after surgery, subcutaneous fat tissue was removed, the skin was washed with sterile saline buffer, and 1.5 x 1.5 cm size skin pieces were cut. Epidermis and superficial layers of dermis were removed by dermatome (Marathon N7, TPC Advanced Technology, Inc. Diamond Bar, CA, USA) to obtain the wound model. Skin pieces were placed on trans-well inserts with an 8-µm pore membrane (Cell Culture Inserts, BD Falcon^{™}, Durham, NC, USA) and these were placed in a 6-well plate filled with 2 ml RPMI-1640 culture medium (PAA, Heidelberg, Germany), supplemented with 10 % fetal calf serum (FCS, PAA, Heidelberg, Germany), 100 I.E./ml of penicillin, and 100 g/ml of streptomycin (Sigma-Aldrich, Hamburg, Germany). 20 µL hPG-PEtO having a concentration of 5 mg/mL in sterile distilled water were applied on the wound area of skin. Samples were then incubated for one week in an incubator at 37 °C with 5 % CO₂ and 100 % humidity. Skin samples treated with sterile distilled water only served as control. Every day, medium and non-penetrated material on top of the wound were collected and fresh materials refilled again. After one week, the treated area of skin was cut and subcutaneously frozen with liquid nitrogen. Skin sections of 5 µm in thickness were prepared with a cryotome (Frigocut 2800 N, Leica, Bensheim, Germany).

In a wound model having lower damages, hPG-*b*-PEtO_{FITC} was mostly deposited in the stratum corneum and did not penetrate in deeper layers (data not shown). Since deep penetration of this copolymer into the wound area of human skin can increase its therapeutic efficiency including autolytic debridement of necrotic tissue and an infection in sublayers, it appeared that hPG-*b*-PEtO might be particularly appropriate to treat injured skin.

The *ex vivo* wound model of human skin was further incubated with hPG-*b*-PEtO in cell culture medium. It was then investigated by hematoxylin-and-eosin (H&E) staining to evaluate any possible effects of hPG-*b*-PEtO on cellular structure and integrity of the incubated skin. Interestingly, H&E staining showed generation of a new layer of cells in the sublayer of skin that was not observed in the control experiment under the same conditions (data not shown). In some skin regions, young scar tissue was generated. Above these regions, an old stratum corneum layer of skin has been removed upon generation of new layers. A rejoining of existing skin layers with the newly generated young cells in the wound sublayers could be observed (data not shown).

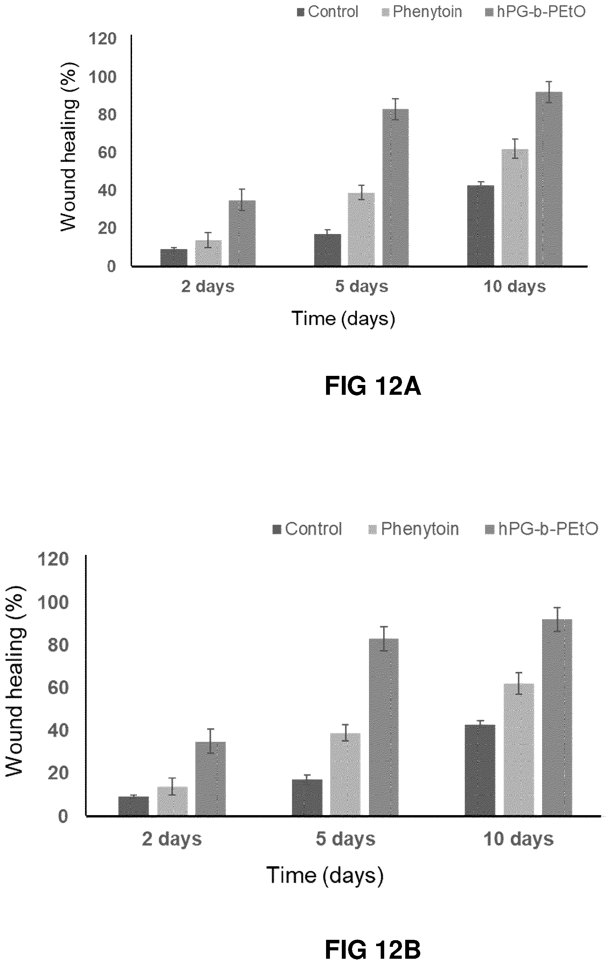

These results showed that hPG-*b*-PEtO is able to promote the cell proliferation in injured human skin and improves its regeneration. Based on these achievements, the efficiency of hPG-*b*-PEtO for diabetic wound healing in animals was investigated. For this purpose, an animal study was performed in two different groups of rats with infected non-diabetic wounds (Figure 12A) and infected diabetic wounds (Figure 12B). The wounds were treated with a saline buffer solution containing hPG-*b*-PEtO (5 mg/mL) or phenytoin (a commercial ointment) for 10 days in a comparative study. Saline buffer without additions was used as control. The ability of the copolymer to heal wounds was investigated by measuring the wound contraction at different treatment times. It was found that hPG-*b*-PEtO is able to efficiently accelerate and improve healing of the treated chronic wounds.

After 10 days, the wound closure areas of infected non-diabetic wounds was 98 % in the hPG-*b*-PEtO-treated group, but only 90 % in the phenytoin-treated group and even only 75 % in the control group (Figure 12A).

After 10 days, the wound closure areas of infected diabetic wounds was 92 % in the hPG-b-PEtO-treated group, but only 62 % in the phenytoin-treated group and even only 43 % in the control group (Figure 12B).

Summarizing, polyglycerol-*b*-polyoxazoline (hPG-b-PEtO) and poly(vinyl alcohol)-*graft*-poly(2-ethyl-2-oxazoline) (PVA-*g*-PEtO) copolymers were synthesized by a straightforward strategy on a gram scale. The synthesized copolymers were freely soluble in aqueous solutions but assembled in the form of nanoparticles, due to the different solubility of different blocks. hPG-b-PEtO did not show any significant toxicity up to a concentration of 10 mg/ml, indicating a high biocompatibility of this compound and its great potential for future biomedical applications. According to ex-vivo experiments and animal studies, this copolymer was able to promote wound healing of diabetic and non-diabetic wounds and to induce generation of new skin layers in ten days.

### List of references cited in the preceding sections or considered otherwise to be of relevance

[1] H. Chen, R. Cheng, X. Zhao, Y. Zhang, A. Tam, Y. Yan, H. Shen, Y. S. Zhang, J. Qi, Y. Feng, L. Liu, G. Pan, W. Cui, L. Deng, NPG Asia Materials 2019, 11, 3.
[2] M. Asani, Z. Farouk, S. Gambo, Nigerian Journal of Basic and Clinical Sciences 2016, 13, 55-58.
[3] S. Sattari, S. Beyranvand, K. Soleimani, K. Rossoli, P. Salahi, I. S. Donskyi, A. Shams, W. E. S. Unger, A. Yari, G. Farjanikish, H. Nayebzadeh, M. Adeli, Langmuir 2020, 36, 6706-6715*.*
[4] aE. Gianino, C. Miller, J. Gilmore, Bioengineering2018, 5, 51; bP. Zhang, J. Lu, Y. Jing, S. Tang, D. Zhu, Y. Bi, Annals of Medicine 2017, 49, 106-116.
[5] aM. Mir, M. N. Ali, A. Barakullah, A. Gulzar, M. Arshad, S. Fatima, M. Asad, Prog Biomater 2018, 7, 1-21; bM. Mir, U. Ansari, M. Najabat Ali, J Appl Biomater Funct Mater 2017, 15, e63-e69; cM. Jenks, J. Craig, W. Green, N. Hewitt, M. Arber, A. Sims, Appl Health Econ Health Policy 2016, 14, 135-149.
[6] aM. Mir, M. N. Ali, J. Sami, U. Ansari, Advances in Materials Science and Engineering 2014, 2014, 753496; bG. D. Winter, Nature 1962, 193, 293-294.
[7] aB. Boonkaew, M. Kempf, R. Kimble, P. Supaphol, L. Cuttle, Burns 2014, 40, 89-96; bV. Dhanalakshmi, T. R. Nimal, M. Sabitha, R. Biswas, R. Jayakumar, J Biomed Mater Res 8 Appl Biomater 2016, 104, 797-807; cR. Dantes, Y. Mu, R. Belflower, D. Aragon, G. Dumyati, L. H. Harrison, F. C. Lessa, R. Lynfield, J. Nadle, S. Petit, S. M. Ray, W. Schaffner, J. Townes, S. Fridkin, JAMA Intern Med 2013, 173, 1970-1978.
[8] J. J. Hutchinson, J. C. Lawrence, J Hosp Infect 1991, 17, 83-94.
[9] C. V. Nguyen, C. V. Washington, S. L. Soon, Dermatol Surg 2013, 39, 123-125.
[10] S. Das, A. B. Baker, Front Bioeng Biotechnol 2016, 4, 82.
[11] aG. Paradossi, F. Cavalieri, E. Chiessi, C. Spagnoli, M. K. Cowman, Journal of Materials Science: Materials in Medicine 2003, 14, 687-691; bT. Gao, M. Jiang, X. Liu, G. You, W. Wang, Z. Sun, A. Ma, J. Chen, Polymers (Basel) 2019, 11; cN. Alexandre, J. Ribeiro, A. Gärtner, T. Pereira, I. Amorim, J. Fragoso, A. Lopes, J. Fernandes, E. Costa, A. Santos-Silva, M. Rodrigues, J. D. Santos, A. C. Maurício, A. L. Luís, J Biomed Mater Res A 2014, 102, 4262-4275.
[12] aE. Mohammadifar, F. Zabihi, Z. Tu, S. Hedtrich, A. Nemati Kharat, M. Adeli, R. Haag, Polymer Chemistry 2017, 8, 7375-7383; bR. Hatamvand, A. Shams, E. Mohammadifar, A. Yari, M. Adeli, Journal of Polymer Science Part A: Polymer Chemistry 2019, 57, 1430-1439; cE. Mohammadifar, A. Nemati Kharat, M. Adeli, Journal of Materials Chemistry 8 2015, 3, 3896-3921 ; dF. Zabihi, S. Wieczorek, M. Dimde, S. Hedtrich, H. G. Börner, R. Haag, J Control Release 2016, 242, 35-41; eE. Mohammadifar, A. Bodaghi, A. Dadkhahtehrani, A. Nemati Kharat, M. Adeli, R. Haag, ACS Macro Letters 2017, 6, 35-40; fF. Zabihi, H. Koeppe, K. Achazi, S. Hedtrich, R. Haag, Biomacromolecules 2019, 20, 1867-1875.
[13] M. Bauer, C. Lautenschlaeger, K. Kempe, L. Tauhardt, U. S. Schubert, D. Fischer, Macromol Biosci2012, 12, 986-998.
[14] aT. Lorson, M. M. Lübtow, E. Wegener, M. S. Haider, S. Borova, D. Nahm, R. Jordan, M. Sokolski-Papkov, A. V. Kabanov, R. Luxenhofer, Biomaterials 2018, 178, 204-280; bR. Hoogenboom, Angewandte Chemie International Edition 2009, 48, 7978-7994; cS. Zalipsky, C. B. Hansen, J. M. Oaks, T. M. Allen, Journal of Pharmaceutical Sciences 1996, 85, 133-137; dM. C. Woodle, C. M. Engbers, S. Zalipsky, Bioconjugate Chemistry 1994, 5, 493-496; eN. Adams, U. S. Schubert, Advanced Drug Delivery Reviews 2007, 59, 1504-1520; fP. Goddard, L. E. Hutchinson, J. Brown, L. J. Brookman, Journal of Controlled Release 1989, 10, 5-16*;* gF. C. Gaertner, R. Luxenhofer, B. Blechert, R. Jordan, M. Essler, J Control Release 2007, 119, 291-300; hT. X. Viegas, M. D. Bentley, J. M. Harris, Z. Fang, K. Yoon, B. Dizman, R. Weimer, A. Mero, G. Pasut, F. M. Veronese, Bioconjugate Chemistry 2011, 22, 976-986.
[15] D. Mahata, M. Jana, A. Jana, A. Mukherjee, N. Mondal, T. Saha, S. Sen, G. B. Nando, C. K. Mukhopadhyay, R. Chakraborty, S. M. Mandal, Scientific Reports 2017, 7, 46412.
[16] C. J. Waschinski, S. Barnert, A. Theobald, R. Schubert, F. Kleinschmidt, A. Hoffmann, K. Saalwächter, J. C. Tiller, Biomacromolecules 2008, 9, 1764-1771.
[17] E. Imbert-Laurenceau, J. Crepinior, J.-M. Crance, A. Jouan, V. Migonney, Journal of Medical Virology 2003, 69, 503-509.
[18] N. V. Faenza, Z. W. Lebens-Higgins, P. Mukherjee, S. Sallis, N. Pereira, F. Badway, A. Halajko, G. Ceder, F. Cosandey, L. F. J. Piper, G. G. Amatucci, Langmuir 2017, 33, 9333-9353.
[19] P. Sengupta, B. L. V. Prasad, ACS Omega 2018, 3, 4242-4251.
[20] P. Wilson, P. C. Ke, T. P. Davis, K. Kempe, European Polymer Journal 2017, 88, 486-515.

## Claims

1. Copolymer comprising:
a) a first block chosen from a polyglycerol having a molecular weight lying in a range of from 250 Da to 20 kDa and a poly(vinyl alcohol) having a molecular weight lying in a range of from 1 kDa to 100 kDa;
b) a second block covalently bound to the first block, wherein the second block is an optionally substituted polyoxazoline; and
c) a third block covalently bound to the second block, wherein the third block is a hydrocarbon chain comprising 1 to 20 carbon atoms that are substituted with or interrupted by at least one amino group and that are optionally substituted with or interrupted by at least one entity chosen from the group consisting of oxygen atoms, hydroxyl groups, carboxyl groups, sulfur atoms, sulfhydryl groups, sulfate groups, and sulfonate groups;
or a hydrolysis product of this copolymer in which i) -CO-R³ groups of the optionally substituted polyoxazoline of the second block that are bound to a nitrogen atom of the optionally substituted polyoxazoline are replaced by -H, wherein R³ denotes -H or a substituent of the optionally substituted polyoxazoline, and/or ii) the third block is fully or partially replaced by a proton or a hydroxyl group.

2. Copolymer according to claim 1, **characterized in that** the copolymer is a linear copolymer, in which the first block and the second block are linearly bound to each other, or a branched copolymer, in which the first block forms a core or a backbone and the second block forms a sidechain of the first block.

3. Copolymer according to claim 1 or 2, **characterized in that** the third block is an amino acid residue.

4. Copolymer according to claim 3, **characterized in that** the third block is an arginine residue.

5. Copolymer according to claim 1 or 2, **characterized in that** the third block is a saccharide residue carrying at least one amino group.

6. Copolymer according to any of the preceding claims, **characterized in that** the copolymer corresponds to general formula (I): 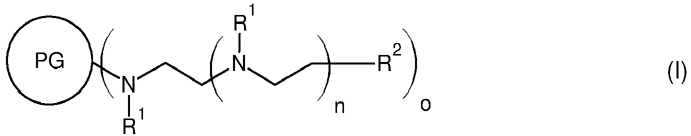 wherein
PG denotes a linear or hyperbranched polyglycerol;
R¹ is -H, -CO-CH₃, or -CO-CH₂-CH₃;
R² is -H, -OH, or a hydrocarbon chain comprising 1 to 20 carbon atoms that are substituted with or interrupted by at least one amino group and that are optionally substituted with or interrupted by at least one entity chosen from the group consisting of oxygen atoms, hydroxyl groups, carboxyl groups, sulfur atoms, sulfhydryl groups, sulfate groups, and sulfonate groups;
n is ≥ 1; and
o is ≥ 1.

7. Copolymer according to any of the preceding claims, **characterized in that** the copolymer corresponds to general formula (II): 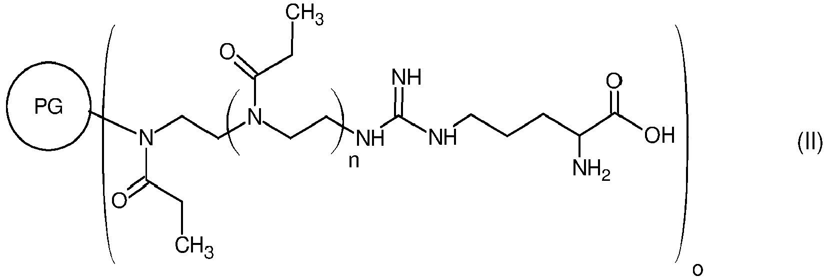 wherein
n is ≥ 1; and
o is ≥ 1.

8. Copolymer according to any of claims 1 to 5, **characterized in that** the copolymer corresponds to general formula (III): 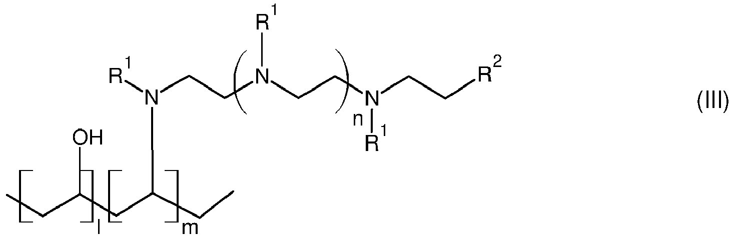 wherein
R¹ is -H, -CO-CH₃, or -CO-CH₂-CH₃;
R² is -H, -OH, or a hydrocarbon chain comprising 1 to 20 carbon atoms that are substituted with or interrupted by at least one amino group and that are optionally substituted with or interrupted by at least one entity chosen from the group consisting of oxygen atoms, hydroxyl groups, carboxyl groups, sulfur atoms, sulfhydryl groups, sulfate groups, and sulfonate groups;
I is ≥ 1;
m is ≥ 1; and
n is ≥ 1.

9. Copolymer according to any of claims 1 to 5 or according to claim 8, **characterized in that** the copolymer corresponds to general formula (IV): 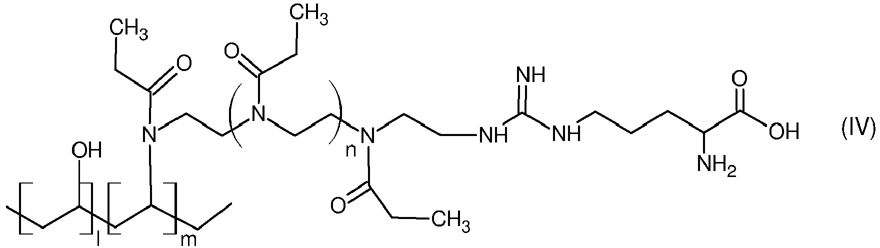 wherein
I is ≥ 1;
m is ≥ 1; and
n is ≥ 1.

10. Copolymer according to claim 8 or 9, **characterized in that** m has a value that is 1 to 50 % of a value of I.

11. Copolymer according to any of the preceding claims or hydrolysis product of this copolymer for use in therapy, in particular for use in treating wounds, in particular diabetic wounds.

12. Use of a copolymer according to any of claims 1 to 10 or of a hydrolysis product of this copolymer as carrier for delivering a nucleic acid in vitro.

13. Copolymer according to any of claims 1 to 10 or of a hydrolysis product of this copolymer for use in therapy, namely for delivering a nucleic acid in vivo.

14. Method for manufacturing a copolymer according to any of claims 1 to 10, wherein the method comprises the following steps:
a) reacting an at least partially mesylated polyglycerol having a polyglycerol backbone with a molecular weight lying in a range of from 250 Da to 20 kDa, or an at least partially mesylated poly(vinyl alcohol) having a poly(vinyl alcohol) backbone with a molecular weight lying in a range of from 1 kDa to 100 kDa with 2-methyl-2-oxazoline or 2-ethyl-2-oxazoline for a first time period at a first temperature in a reaction mixture to obtain a first intermediate product;
b) adding a hydrocarbon compound to the reaction mixture, wherein the hydrocarbon compound has a hydrocarbon chain comprising 1 to 20 carbon atoms that are substituted with or interrupted by at least one amino group and that are optionally substituted with or interrupted by at least one entity chosen from the group consisting of oxygen atoms, hydroxyl groups, carboxyl groups, sulfur atoms, sulfhydryl groups, sulfate groups, and sulfonate groups, and allowing to react the hydrocarbon compound with the first intermediate product for a second period of time at a second temperature; and
c) gathering a copolymer according to any of claims 1 to 10 from the reaction mixture.

15. Method according to claim 14, **characterized in that** the hydrocarbon compound is an amino acid or a saccharide carrying at least one amino group.
